# EUROPEAN PATENT SPECIFICATION

(11) **EP 2 206 189 B1**
(45) Date of publication and mention of the grant of the patent: **22.10.2014**
(21) Application number: 08832648.3
(22) Date of filing: 18.09.2008
(51) Int. Cl.: H01M 10/42, H01M 10/0567, H01M 10/0569

(54) **NON-AQUEOUS ELECTROLYTE LITHIUM SECONDARY BATTERY**
LITHIUM-SEKUNDÄRBATTERIE MIT WASSERFREIEM ELEKTROLYT
BATTERIE SECONDAIRE AU LITHIUM À ÉLECTROLYTE NON AQUEUX

(30) Priority: 19.09.2007 KR 20070095431
(43) Date of publication of application: 14.07.2010
(73) Proprietor: LG CHEM, LTD., Seoul 150-721 (KR)
(72) Inventor: JEON, Jong-Ho, Daejeon 305-340 (KR); CHO, Jeong-Ju, Daejeon, 305-738 (KR); LEE, Ho-Chun, Daejeon 305-745 (KR)
(74) Representative: HOFFMANN EITLE
(86) International application number: PCT/KR2008/005511
(87) International publication number: WO 2009/038358

(56) References cited:
- EP-A1- 1 598 895
- JP-A- 2007 128 765
- KR-A- 20050 014 408
- KR-A- 20050 071 752
- US-A1- 2001 019 800
- US-A1- 2003 118 914
- US-A1- 2006 121 356
- US-B2- 7 083 878

## Description

### BACKGROUND OF THE INVENTION

### Field of the Invention

The present invention relates to a non-aqueous electrolyte lithium secondary battery, and more particularly to a lithium secondary battery with an improved discharging characteristic at a high temperature.

### Description of the Related Art

Recently, interest in energy storage technologies has increased. As the energy storage technologies are extended to such devises as cellular phones, camcorders and notebook PCs, and further to electric vehicles, the demand for a high energy density battery used as a power source of such an electronic device is increased. A lithium ion secondary battery is one of the most satisfactory batteries, and numerous studies towards improvements are now in progress actively.

Among the currently used secondary batteries, a lithium secondary battery developed in the early 1990's includes an anode made of carbon material capable of occluding or emitting lithium ions, a cathode made of lithium-containing oxide, and a non-aqueous electrolyte obtained by dissolving a suitable amount of lithium salt in a mixed organic solvent.

The lithium secondary battery has an average discharge voltage of about 3.6V to about 3.7V, which exhibits an advantageously higher operation voltage than those of other batteries such as alkali batteries or nickel-cadmium batteries. To create such a higher operation voltage, an electrolyte composition should be electrochemically stable in a charging/discharging voltage range from 0 to 4.2V. For this purpose, a mixed solvent in which a cyclic carbonate compound such as ethylene carbonate or propylene carbonate and a linear carbonate compound such as dimethyl carbonate, ethylmethyl carbonate or diethyl carbonate are suitably mixed is used as a solvent for the electrolyte. The solute of the electrolyte is usually a lithium salt, such as LiPF₆, LiBF₄ or LiClO₄, which acts as a source for supplying lithium ions in the battery and thus enables the lithium battery to operate.

Lithium ions coming out from the cathode active material such as lithium metal oxide during an initial charging process of a lithium secondary battery move towards the anode active material, such as graphite, and then are intercalated between the layers of the anode active material. At this time, due to the high reactivity of lithium, the electrolyte reacts with carbon of the anode active material on the surface of the anode active material such as graphite, thereby generating compounds such as Li₂CO₃, Li₂O and LiOH. These compounds form a kind of SEI (Solid Electrolyte Interface) film on the surface of the anode active material such as graphite.

The SEI film plays the role of an ion tunnel, which allows only lithium ions to pass. Due to the ion tunnel effects, the SEI film prevents an organic solvent having high molecular weight from moving together with lithium ions in the electrolyte and being intercalated into layers of the anode active material and thus breaking down the anode structure. Thus, since the electrolyte is not contacted with the anode active material, the electrolyte is not decomposed, and also the amount of lithium ions in the electrolyte is reversibly maintained, thereby ensuring stable charging/discharging.

However, in a thin angled battery, while the above SEI film is formed, gas such as CO, CO₂, CH₄ and C₂H₆, generated by decomposition of a carbonate-based solvent, increases the battery thickness during the charging process. In addition, if a battery is left at a high temperature in a fully charged state, the SEI film is slowly broken down due to increased electrochemical energy and thermal energy over time. As a result, side reactions continuously occur between the exposed surface of the anode and surrounding electrolyte. Due to continuous gas generation at this time, an inner pressure of the battery is increased, thereby increasing thickness of the battery, and this may cause problems in electronics such as cellular phones and notebook computers with regard to a high-temperature performance of the battery. In addition, the lithium secondary battery containing a large amount of ethylene carbonate exhibits a more serious problem in inner pressure increase of the battery since the SEI film is unstable. Further, since the ethylene carbonate has a high freezing point (37 to 39 °C) and it is in a solid state at room temperature, it has low ionic conductivity at a low temperature. Thus, a lithium battery using a non-aqueous solvent containing a large amount of ethylene carbonate exhibits poor low-temperature conductivity.

In order to solve the above problems, endeavors have been made to change the phase of the SEI film forming reaction by varying the composition of solvent components of a carbonate organic solvent in various ways or adding specific additives. However, it is so far known in the art that, when the solvent component is changed or the specific additive is added to an electrolyte to improve the battery performance, some areas of performance are improved, but other areas of performances may be deteriorated in many cases.

For example, Japanese Patent No. 3,032,338 discloses a non-aqueous electrolyte secondary battery containing a ternary system organic solvent composed of an ethylene carbonate, dimethyl carbonate and methyl propionate. However, a linear carbonate such as dimethyl carbonate deteriorates charging/discharging cycle efficiencies of a lithium secondary battery, and methyl propionate deteriorates discharging characteristics since it has a relatively high reactivity with the anode.

In addition, Japanese Laid-open Patent Publication No. 2005-276844 discloses a non-aqueous electrolyte secondary battery containing a binary system organic solvent composed of cyclic carbonate and linear carbonate and a lithium salt composed of LiBF₄ and/or LiPF₆. However, this lithium secondary battery exhibits deteriorated charging/discharging efficiency due to the linear carbonate.

Also, Japanese Patent No. 3,029,271 discloses a lithium secondary battery using a mixed organic solvent in which a cyclic carbonate such as propylene carbonate and a linear ester compound such as methyl acetate are mixed. However, since methyl acetate also has a relatively high reactivity with the anode, discharging characteristics deteriorate.

Meanwhile, Japanese Laid-open Patent Publication No. H07-153486 discloses a lithium secondary battery using an electrolyte made by adding 0.5 to 50 volume% of γ butyrolactone to a 1:1 (volume ratio) mixture of ethylene carbonate and dimethyl carbonate. However, if γ butyrolactone is added in this manner, the life cycle of the battery may be shortened though high-rate discharging characteristics at a low temperature are improved.

EP 1598895 A1 discloses a lithium secondary battery of high capacity excelling in storage capability, cycle characteristics and continuous charging performance, According to the authors, the properties of the battery enable a reduction of gas generation from the battery, allowing the battery to be miniaturized and enhancing its performance. The lithium secondary battery contains a nonaqueous electrolytic solution composed mainly of a lithium salt and a nonaqueous solvent capable of dissolving the lithium salt, characterized in that the lithium salt comprises 0.2 to 2 mol/liter of LiPF6 and 0.005 to 0.4 molar ratio (to LiPF6) of LiBF4 and/or the lithium salt of an alkyl disulfonylimide. Meanwhile, the nonaqueous solvent comprises (1) ethylene carbonate and/or propylene carbonate as the main components, (2-1) symmetric chain carbonate, (2-2) asymmetric chain carbonate and (3) vinylene carbonate.

US2003/118914 A1 discloses a nonaqueous electrolyte containing a sultone compound having unsaturated bonds. According to the authors the electrolyte suppresses the swelling of nonaqueous secondary batteries containing the electrolyte which have been allowed to stand at a high temperature. The authors report that the battery has an excellent high temperature standing performance. Furthermore, the nonaqueous electrolyte can contain, in addition to the sultone compound containing unsaturated bonds, a vinylene carbonate derivative in 1.0 wt % or below, and/or a cyclic sulfate in 2.0 wt % or below. It is reported that this results in a nonaqueous electrolyte secondary battery with reduced initial discharge capacity degradation when the addition amount of the sultone compound having unsaturated bonds is increased. The battery is also reported to exhibit excellent high temperature standing performance and a large initial discharge capacity.

US2006/121356 A1 discloses an electrolyte for a rechargeable battery including 20-70% by volume of at least two cyclic carbonates selected from ethylene carbonate, propylene carbonate, vinylene carbonate or butylene carbonate, 30-80% by volume of an ester selected from propyl propionate, propyl acetate, butyl acetate or a mixture thereof, and a lithium salt.

US 2001/019800 A1 relates to a rechargeable lithium electrochemical cell comprising an electrolyte containing a lithium salt dissolved in a non-aqueous solvent, at least one positive electrode, and at least one negative electrode of the paste type containing an electrochemically active material which is a carbon compound suitable for inserting lithium ions. In addition, the cell comprises a binder. The cell is characterized in that said solvent contains at least one saturated cyclic carbonate and at least one linear ester of a saturated aliphatic monocarboxylic acid, and in that said binder is a polymer having no fluorine.

As mentioned above, it is urgent to develop a non-aqueous electrolyte composition capable of providing a lithium secondary battery that exhibits excellent high-rate charging/discharging characteristics, life cycle, low-temperature discharging characteristics and high-temperature discharging characteristics.

### SUMMARY OF THE INVENTION

The present invention is designed to solve the problems of the prior art, and therefore it is an object of the present invention to provide a lithium secondary battery, which exhibits excellent charging/discharging characteristics and improved life cycle and low-temperature discharging characteristics, and also particularly restrains gas generation at a high temperature.

In order to accomplish the above object, the present invention provides a lithium secondary battery having an anode made of carbon material capable of occluding or emitting a lithium ion, a cathode made of lithium-contained oxide, and a non-aqueous electrolyte, wherein the non-aqueous electrolyte includes a lithium salt containing LiPF₆ and LiBF₄; and a non-linear carbonate-based mixed organic solvent in which (a) a cyclic carbonate having ethylene carbonate or a mixture of ethylene carbonate and propylene carbonate and (b) a propionate-based ester as defined in claim 1 are mixed at a volume ratio (a:b) in the range from about 10:90 to about 70:30; further including an inhibitor against a reaction between the anode and the linear propionate ester, wherein the inhibitor is 1,3-dioxolane-2-onylmethyl allyl sulphonate. The content of the inhibitor against a reaction between the anode and the ethyl propionate is preferably about 0.05 to about 10 weight%, based on the total weight of the non-aqueous electrolyte.

### DESCRIPTION OF THE PREFERRED EMBODIMENTS

Hereinafter, preferred embodiments of the present invention will be described in detail. Prior to the description, it should be understood that the terms used in the specification and the appended claims should not be construed as limited to general and dictionary meanings, but interpreted based on the meanings and concepts corresponding to technical aspects of the present invention on the basis of the principle that the inventor is allowed to define terms appropriately for the best explanation.

As explained above, a lithium secondary battery includes an anode made of carbon material capable of occluding or emitting a lithium ion, a cathode made of lithium-containing oxide, and a non-aqueous electrolyte.

The non-aqueous electrolyte of the present invention includes a lithium salt containing LiPF₆ and LiBF₄; and a non-linear carbonate-based mixed organic solvent in which (a) a cyclic carbonate having ethylene carbonate or a mixture of ethylene carbonate and propylene carbonate and (b) a propionate-based ester are mixed at a volume ratio (a:b) in the range from about 10:90 to about 70:30, in which the propionate-based ester is expressed by the following Chemical Formula 1: 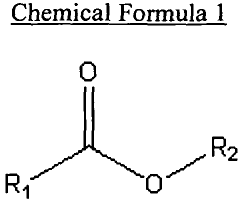 where R₂ is a linear or branched C₁₋₆ alkyl group, and R₁ and R₂ may be unsubstituted or substituted with at least one halogen, respectively.

Non-limiting examples of the propionate-based ester compound expressed by the Chemical Formula 1 include at least one compound selected from the group consisting of methyl propionate, ethyl propionate, propyl propionate, and butyl propionate. Ethyl propionate-based ester is preferred.

The ethyl propionate-based ester compound can be expressed by the following Chemical Formula 2 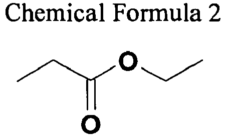 where at least one hydrogen atom is capable of being substituted with fluorine.

The lithium salt included in the non-aqueous electrolyte of the lithium secondary battery according to the present invention contains LiPF₆ and LiBF₄, but it is not limited thereto. The mixture of two lithium salts of LiPF₆ and LiBF₄, employed in the present invention, may restrain gas generation since it provides stability at a_high temperature and thus restrains decomposition of an electrolyte at a surface of the electrode during high-temperature storage without deteriorating low-temperature discharging characteristics and high-rate discharging characteristics by ethyl propionate, and thus it allows improved mounting properties of a battery set.

The amount of LiPF₆ and LiBF₄ may be suitably controlled as required. For example, when LiPF₆ is added to the organic solvent, the concentration of LiPF₆ may be about 0.5 to about 2.0M. When the concentration is not less than about 0.5M, conductivity of an electrolyte is excellent and high-rate discharging characteristics and the life cycle characteristics of the lithium secondary battery are greatly improved. When the concentration is not greater than about 2.0M, low-temperature discharging characteristics and high-rate discharging characteristics are excellent, and also the decomposition reaction of the electrolyte at a surface of the electrode is very well restrained during high-temperature storage.

In addition, the content of LiBF₄ is about 0.05 to about 1.0 weight% based on the total weight of the non-aqueous electrolyte. When the content of LiBF₄ is not less than 0.05 weight%, gas generation in the battery at a high temperature is very well restrained. When the content of LiBF₄ is not greater than about 1.0 weight%, the amount of generated SEI (Solid Electrolyte Interface) film at a surface of the electrode during an initial charging process is most suitably maintained.

In the non-aqueous electrolyte of a lithium secondary battery according to the present invention, the lithium salt included therein as an electrolyte may employ any one commonly used in an electrolyte for a lithium secondary battery, and the lithium salt may further include a material or a mixture of at least two materials selected from the group consisting of LiSbF₆, LiAsF₆, LiClO₄, LiN(C₂F₅SO₂)₂, LiN(CF₃SO₂)₂, CF₃SO₃Li and LiC(CF₃SO₂)₃ in addition to LiPF₆ and LiBF₄, above mentioned.

Ethylene carbonate or a mixture of ethylene carbonate and propylene carbonate has a high dielectric constant and thus easily dissociates a lithium salt in an electrolyte, so it attributes to improvement of charging/discharging capacity of a battery. In case propylene carbonate is mixed, a preferable volume ratio of propylene carbonate is 0.25 to 1 with respect to ethylene carbonate, and charging/discharging capacities may be improved within the range. The non-aqueous electrolyte of the lithium secondary battery according to the present invention employs a non-linear carbonate-based organic solvent. Linear carbonate is not added so as to improve the charging/discharging efficiency of the lithium secondary battery, but a small amount of linear carbonate may be included if it does not give any negative influence on the purpose of the present invention.

Ethyl propionate is a linear ester carbonate that has a low freezing point and a high boiling point and exhibits excellent low-temperature characteristics. In addition, ethyl propionate exhibits a relatively low reactivity with respect to an anode. Such ethyl propionate is mixed with the above-mentioned cyclic carbonate to attribute to improve low-temperature discharging characteristics and the life cycle of the lithium secondary battery. A volume ratio (a:b) of (a) a cyclic carbonate having ethylene carbonate or a mixture of ethylene carbonate and propylene carbonate and (b) a propionate-based ester expressed by the Chemical Formula 1 such as ethyl propionate in the range from about 10:90 to about 70:30, more preferably from about 20:80 to about 60:40.

If the volume ratio of ethyl propionate is less than the above range, low-temperature discharging characteristics of a lithium secondary battery deteriorate. If the volume ratio of ethyl propionate exceeds the above range, high-rate charging/discharging characteristics of a lithium secondary battery deteriorate.

In addition, the non-aqueous electrolyte of a lithium secondary battery according to the present invention includes an inhibitor against a reaction between the anode and the ethyl propionate.

As mentioned above, ethyl propionate has a low reactivity with an anode at a normal temperature and thus exhibits excellent discharging characteristics, but the discharging characteristics may deteriorate at a high temperature since ethyl propionate reacts with the anode. Thus, in order to prevent the high-temperature discharging characteristics from being deteriorated due to self-discharging phenomenon at high temperature storage, the inhibitor against a reaction between the anode and the ethyl propionate is added in accordance with the present invention.

Such an inhibitor is decomposed prior to the cyclic carbonate and the ethyl propionate to form a film on an anode, when a lithium secondary battery is initially charged. Accordingly, it is possible to prevent ethyl propionate from reacting with an anode and thus deteriorating the discharging efficiency even at a high temperature.

The inhibitor against a reaction between the ethyl propionate and the anode is 1,3-dioxolane-2-onylmethyl allyl sulphonate.

The inhibitor against a reaction between the anode and the ethyl propionate may be added to the content of about 0.05 to about 10 weight% based on the total weight of the non-aqueous electrolyte.

In addition, other compounds such as a lactone, ether, ester, acetonitrile, lactam, and ketone may be added to the non-aqueous electrolyte of a lithium secondary battery without departing from the purpose of the present invention.

The anode made of a carbon material capable of occluding or emitting a lithium ion and the cathode made of lithium-containing oxide, used for the lithium secondary battery of the present invention, may be any one commonly used for making a lithium secondary battery.

For example, the carbon material capable of occluding or emitting a lithium ion may be low-crystalline carbon or high-crystalline carbon. The low-crystalline carbon includes soft carbon or hard carbon, and the high-crystalline carbon includes natural graphite, Kish graphite, pyrolytic carbon, mesophase pitch based carbon fiber, meso-carbon microbeads, mesophase pitches, and high-temperature sintered carbon such as petroleum or coal tar pitch derived cokes, but it is not limited thereto. At this time, the anode may have a binding agent, which may use various kinds of binder polymer such as PVDF-co-HFP (polyvinylidene-co-hexafluropopylene), polyvinylidenefluoride, polyacrylonitrile, polymethylmethacrylate, SBR (Styrene-Butadiene Rubber) copolymer, and modified SBR copolymer.

In addition, a cathode active material made of lithium-containing oxide preferably employs a lithium-containing transition metal oxide, for example any one material or a mixture of at least two materials selected from the group consisting of LiCoO₂, LiNiO₂, LiMnO₂, LiMn₂O₄, Li(NiₐCo_{b}Mn_{c})O₂ (0<a<1, 0<b<1, 0<c<1, a+b+c=1), LiNi_{1-y}Co_{y}O₂, LiCo_{1-y}Mn_{y}O₂, LiNi_{1-y}Mn_{y}O₂ (O≤y<1), Li(NiₐCo_{b}Mn_{c})O₄ (0<a<2, 0<b<2, 0<c<2, a+b+c=2), LiMn_{2-z}Ni_{z}O₄, LiMn_{2-z}Co_{z}O₄ (0<z<2), LiCoPO₄ and LiFePO₄, but it is not limited thereto.

In addition, a separator is generally interposed between the cathode and the anode, and the separator may be common porous polymer films used as a conventional separator, such as porous polymer film made using ethylene homopolymer, propylene homopolymer, ethylene/butene copolymer, ethylene/hexene copolymer or ethylene/methacrylate copolymer, in a single layer or in laminate form. In other cases, the separator may be a common porous non-woven fabric such as a non-woven fabric made of glass fiber with a high melt point or polyethylene terephthalate fiber, but it is not limited thereto.

There is no particular limitation regarding the type of shape of the lithium secondary battery which may be in a cylindrical can shape, an angled shape, a pouch shape or a coin shape.

Hereinafter, the present invention is explained in more detail using Embodiments. However, the following Embodiments and Comparative Examples may be modified in various ways, and the present invention should not be interpreted as being limited thereto. The following Embodiments are just given for persons having ordinary skill in the art to understand the present invention in a better way. Embodiments 1 - 10 and 12 - 15 are provided for illustrative purposes only and do not belong to the present invention.

### Embodiment 1

LiPF₆ was added to a mixed organic solvent in which ethylene carbonate (EC) and ethyl propionate (EP) are mixed in a volume ratio of 3:7 to make 1M LiPF₆ solution, and then 0.1 weight% of LiBF₄ based on the total weight of a non-aqueous electrolyte was added thereto to make a non-aqueous electrolyte.

Then, a pouch-type lithium secondary battery was manufactured in a common way by injecting the non-aqueous electrolyte for a lithium secondary battery prepared as in the above to a pouch-type battery using LiCoO₂ as a cathode active material and artificial graphite as an anode active material.

### Embodiment 2

A pouch-type lithium secondary battery was manufactured in the same way as in the Embodiment 1, except that 0.2 weight% of LiBF₄ was used.

### Embodiment 3

A pouch-type lithium secondary battery was manufactured in the same way as in the Embodiment 1, except that 0.5 weight% of LiBF₄ was used.

### Embodiment 4

A pouch-type lithium secondary battery was manufactured in the same way as in the Embodiment 1, except that 1.0 weight% of LiBF₄ was used.

### Embodiment 5

A pouch-type lithium secondary battery was manufactured in the same way as in the Embodiment 2, except that a mixed organic solvent in which ethylene carbonate (EC) and ethyl propionate (EP) are mixed in a volume ratio of 2:8 was used.

### Embodiment 6

A pouch-type lithium secondary battery was manufactured in the same way as in the Embodiment 2, except that a mixed organic solvent in which ethylene carbonate (EC) and ethyl propionate (EP) are mixed in a volume ratio of 4:6 was used.

### Embodiment 7

A pouch-type lithium secondary battery was manufactured in the same way as in the Embodiment 2, except that a mixed organic solvent in which ethylene carbonate (EC) and ethyl propionate (EP) are mixed in a volume ratio of 7:3 was used.

### Embodiment 8

A pouch-type lithium secondary battery was manufactured in the same way as in the Embodiment 2, except that 3 weight% of vinylene carbonate (VC) was additionally added.

### Embodiment 9

A pouch-type lithium secondary battery was manufactured in the same way as in the Embodiment 2, except that 3 weight% of propane sultone (PS) was additionally added.

### Embodiment 10

A pouch-type lithium secondary battery was manufactured in the same way as in the Embodiment 2, except that 3 weight% of fluoroethylene carbonate (FEC) was additionally added.

### Embodiment 11

A pouch-type lithium secondary battery was manufactured in the same way as in the Embodiment 2, except that 1 weight% of 1,3-dioxolane-2-onylmethyl allyl sulphonate was additionally added.

### Embodiment 12

A pouch-type lithium secondary battery was manufactured in the same way as in the Embodiment 2, except that 3 weight% of vinyl ethyl carbonate (VEC) was additionally added.

### Embodiment 13

A pouch-type lithium secondary battery was manufactured in the same way as in the Embodiment 2, except that 1 weight% of succinic anhydride (SA) was additionally added.

### Embodiment 14

A pouch-type lithium secondary battery was manufactured in the same way as in the Embodiment 2, except that 1 weight% of propene sultone (PRS) was additionally added.

### Embodiment 15

A pouch-type lithium secondary battery was manufactured in the same way as in the Embodiment 2, except that a mixed organic solvent in which ethylene carbonate (EC), propylene carbonate (PC) and ethyl propionate (EP) was mixed in a volume ratio of 3:1:6 was used.

### Comparative Example 1

A pouch-type lithium secondary battery was manufactured in the same way as in the Embodiment 1, except that only LiPF₆ was added to a mixed organic solvent in which ethyl propionate (EP) and propylene carbonate (PC) was mixed in a volume ratio of 3:7 to make 1M LiPF₆ solution, and it was used as a non-aqueous electrolyte.

### Comparative Example 2

A pouch-type lithium secondary battery was manufactured in the same way as in the Comparative Example 1, except that LiBF₄ was used instead of LiPF₆.

### Comparative Example 3

A pouch-type lithium secondary battery was manufactured in the same way as in the Embodiment 1, except that a mixed organic solvent in which ethylene carbonate (EC) and ethyl propionate (EP) was mixed in a volume ratio of 8:2 was used instead of the mixed organic solvent in which ethylene carbonate (EC) and ethyl propionate (EP) was mixed in a volume ratio of 3:7.

### Comparative Example 4

A pouch-type lithium secondary battery was manufactured in the same way as in the Embodiment 1, except that a mixed organic solvent in which ethylene carbonate (EC), diethyl carbonate (DEC) and ethyl propionate (EP) was mixed in a volume ratio of 1:1:1 was used instead of the mixed organic solvent in which ethylene carbonate (EC) and ethyl propionate (EP) was mixed in a volume ratio of 3:7.

### Comparative Example 5

A pouch-type lithium secondary battery was manufactured in the same way as in the Embodiment 1, except that a mixed organic solvent in which ethylene carbonate (EC), dimethyl carbonate (DMC) and ethyl propionate (EP) was mixed in a volume ratio of 1:1:1 was used instead of the mixed organic solvent in which ethylene carbonate (EC) and ethyl propionate (EP) was mixed in a volume ratio of 3:7.

### Comparative Example 6

A pouch-type lithium secondary battery was manufactured in the same way as in the Embodiment 1, except that a mixed organic solvent in which ethylene carbonate (EC), ethyl methyl carbonate (EMC) and ethyl propionate (EP) was mixed in a volume ratio of 1:1:1 was used instead of the mixed organic solvent in which ethylene carbonate (EC) and ethyl propionate (EP) was mixed in a volume ratio of 3:7.

Initial efficiency, capacity sustainable yield, change of high-temperature thickness, low-temperature discharge capacity ratio and high-rate discharge capacity ratio of the pouch-type batteries manufactured as above are shown in the following Table 1.

### Experimental Example: Measurement of Initial Efficiency, Capacity Sustainable Yield, Change of High-Temperature Thickness, Low-Temperature Discharge Capacity Ratio and High-Rate Discharge Capacity Ratio

### Initial Efficiency

After electrolyte was injected into the pouch-type batteries manufactured according to the Embodiments and the Comparative Examples, the batteries were aged at a normal temperature for 2 days and then charged for 50 minutes at a 0.2 C-rate. Subsequently, the batteries were degassed and resealed, charged to 4.2V at a 0.2C rate at room temperature under a constant current/constant voltage condition, and then discharged to 3.0V at a 0.2C under a constant current condition, which is called an initial charging/discharging. At this time, a ratio of charge/discharge capacity is called an initial efficiency, and it is shown in the following Table 1.

### Capacity Sustainable Yield

After the pouch-type batteries manufactured according to the Embodiments and the Comparative Examples were initially charged/discharged, the batteries were charged/discharged 300 times at a 1.0 C-rate in the same voltage region. A sustainable yield of capacity at 300 times relative to the initial discharge capacity is listed in the following Table 1.

### Change of High-Temperature Thickness

After the pouch-type batteries manufactured according to the Embodiments and the Comparative Examples were initially charged/discharged, the batteries were respectively charged to 4.2V, heated to 90°C for 1 hour, and then preserved at 90°C for 4 hours. Then, a maximum change value of battery thickness at a high temperature in comparison to a normal temperature was measured, and its value is listed in the following Table 1.

### Low-Temperature Discharging Characteristic

After the pouch-type batteries manufactured according to the Embodiments and the Comparative Examples were initially charged/discharged, the batteries were charged at a 1.0 C-rate and discharged at a 0.2 C-rate at a normal temperature in the same voltage region. Subsequently, The batteries charged at a 1.0 C-rate were put into a low-temperature chamber of -20°C, and then discharged at a 0.2 C-rate. At this time, a ratio of discharge capacities at normal temperature and -20 °C is shown in the following Table 1.

### High-Rate Discharge Capacity

After the pouch-type batteries manufactured according to the Embodiments and the Comparative Examples were initially charged/discharged, the batteries were charged/discharged 4 times at a 1.0 C-rate, charged at a 1.0 C-rate, and then discharged at a 0.2 C-rate in the same voltage region. At this time, a ratio of a fourth discharge capacity at a 1.0 C-rate and a discharge capacity at a 0.2C rate is listed in the following Table 1.

**Table 1**

| | Initial efficiency (%) | Capacity sustainable yield (%) | High-temperature thickness change (µm) | Low-temperature discharge capacity ratio (%) | High-rate discharge capacity ratio (%) |
|---|---|---|---|---|---|
| Embodiment 1 | 90.3 | 80.8 | 503 | 79 | 93 |
| Embodiment 2 | 90.0 | 81.6 | 439 | 78 | 93 |
| Embodiment 3 | 89.7 | 82.2 | 365 | 76 | 92 |
| Embodiment 4 | 89.1 | 80.9 | 304 | 72 | 90 |
| Embodiment 5 | 91.5 | 79.8 | 480 | 79 | 94 |
| Embodiment 6 | 90.2 | 82.0 | 411 | 75 | 92 |
| Embodiment 7 | 89.4 | 80.5 | 377 | 58 | 90 |
| Embodiment 8 | 90.3 | 81.8 | 444 | 76 | 93 |
| Embodiment 9 | 90.1 | 81.5 | 389 | 77 | 92 |
| Embodiment 10 | 91.0 | 82.4 | 465 | 79 | 93 |
| Embodiment 11 | 89.8 | 82.1 | 372 | 74 | 91 |
| Embodiment 12 | 89.2 | 82.0 | 368 | 75 | 91 |
| Embodiment 13 | 89.5 | 81.8 | 379 | 74 | 90 |
| Embodiment 14 | 89.7 | 81.8 | 350 | 72 | 89 |
| Embodiment 15 | 91.1 | 81.9 | 401 | 79 | 93 |
| Comparative example 1 | 88.1 | 77.2 | 824 | 80 | 94 |
| Comparative example 2 | 78.9 | 63.2 | 749 | 27 | 75 |
| Comparative example 3 | 87.5 | 76.4 | 280 | 32 | 85 |
| Comparative example 4 | 89.2 | 78.1 | 488 | 35 | 84 |
| Comparative example 5 | 89.0 | 72.1 | 622 | 43 | 86 |
| Comparative example 6 | 89.7 | 75.0 | 581 | 39 | 85 |

As seen from the Table 1, it is clear that the lithium secondary batteries manufactured according to the Embodiments exhibit superior characteristics as a whole. Also, it is apparent that the lithium secondary batteries manufactured according to the Comparative Examples exhibit inferior characteristics as compared to the lithium secondary batteries manufactured according to the Embodiments, as a whole. Though some characteristics of the lithium secondary batteries manufactured according to the Comparative Examples are better than those of the lithium secondary batteries of the Embodiments, other characteristics are inferior. Therefore, it is understood that the lithium secondary batteries of the Embodiments are better than those of the Comparative Examples.

### APPLICABILITY TO THE INDUSTRY

The lithium secondary battery of the present invention includes a predetermined mixed organic solvent not having a linear carbonate, so it ensures excellent high-rate charging/discharging characteristics and improved life cycle and low-temperature discharging characteristics. Also, the lithium secondary battery of the present invention allows improved mounting properties of a battery set since gas generation is restrained at a high temperature.

## Claims

1. A non-aqueous electrolyte comprising:
a lithium salt containing LiPF6 and LiBF4; and
a non-linear carbonate-based mixed organic solvent in which (a) a cyclic carbonate having ethylene carbonate or a mixture of ethylene carbonate and propylene carbonate and (b) a propionate-based ester expressed by the following Chemical Formula 1 are mixed at a volume ratio (a:b) in the range from 10:90 to 70:30: and
an inhibitor against reaction between the anode and the propionate-based ester,
**characterized in that**
the inhibitor is 1,3-dioxolane-2-onylmethyl allyl sulphonate, 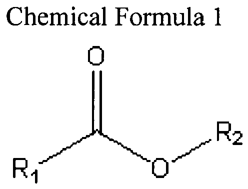
where R2 is a linear or branched C1-6 alkyl group, and R1 and R2 may be unsubstituted or substituted with at least one halogen, respectively.

2. The non-aqueous electrolyte according to claim 1, wherein the propionate-based ester compound expressed by the Chemical Formula 1 includes at least one compound selected from the group consisting of methyl propionate-based ester, ethyl propionate-based ester, propyl propionate-based ester, and butyl propionate-based ester.

3. The non-aqueous electrolyte according to claim 2, wherein the ethyl propionate-based ester compound is expressed by the following Chemical Formula 2 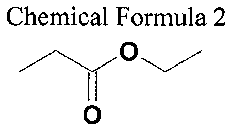 where at least one hydrogen atom is optionally substituted with fluorine.

4. A lithium secondary battery comprising an anode, a cathode, a separator between the anode and the cathode, and the non-aqueous electrolyte of claim 1.

5. The lithium secondary battery according to claim 4, wherein the content of LiBF4 is 0.05 to 1.0 weight% based on the total weight of the non-aqueous electrolyte.

6. The lithium secondary battery according to claim 4, wherein the lithium salt further includes any one material or a mixture of at least two materials selected from the group consisting of LiSbF6, LiAsF6, LiClO4, LiN(C2F5SO2)2, LiN(CF3SO2)2, CF3SO3Li and LiC(CF3SO2)3.

7. The lithium secondary battery according to claim 4, wherein the volume ratio of the ethylene carbonate and the propylene carbonate (ethylene carbonate: propylene carbonate) is 1: 0.25 to 1:1.

8. The lithium secondary battery according to claim 4, wherein the content of the inhibitor against reaction between the anode and the propionate-based ester is 0.05 to 10 weight% based on the total weight of the non-aqueous electrolyte.

9. The lithium secondary battery according to claim 4, wherein the propionate-based ester compound expressed by the Chemical Formula 1 includes at least one compound selected from the group consisting of methyl propionate-based ester, ethyl propionate-based ester, propyl propionate-based ester, and butyl propionate-based ester.

10. The lithium secondary battery according to claim 9, wherein the ethyl propionate-based ester compound is expressed by the following Chemical Formula 2 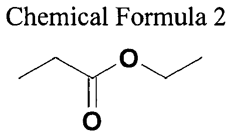 where at least one hydrogen atom is optionally substituted with fluorine.

11. The lithium secondary battery according to claim 4, wherein the anode is made of carbon material capable of occluding or emitting a lithium ion.

12. The lithium secondary battery according to claim 4, wherein the cathode is made of lithium-containing oxide.

## Patentansprüche

1. Nicht-wässriger Elektrolyt, umfassend:
ein Lithiumsalz, das LiPF6 und LiBF4 enthält; und
ein nicht-lineares Carbonat-basiertes gemischtes organisches Lösungsmittel, in welchem (a) ein cyclisches Carbonat, das Ethylencarbonat oder eine Mischung aus Ethylencarbonat und Propylencarbonat aufweist, und (b) ein Propionat-basierter Ester, der durch die folgende chemische Formel 1 ausgedrückt ist, in einem Volumenverhältnis (a:b) im Bereich von 10:90 bis 70:30 gemischt sind; und
einen Inhibitor gegen die Reaktion zwischen der Anode und dem Propionat-basierten Ester,
**dadurch gekennzeichnet, dass** der Inhibitor 1,3-Dioxolan-2-onylmethylallylsulfonat ist, 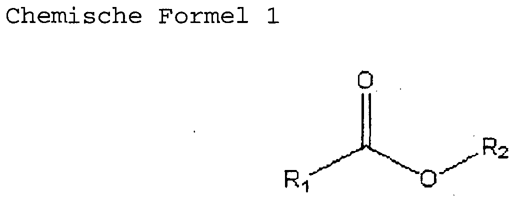
wobei R2 eine lineare oder verzweigte Cl-6-Alkylgruppe ist und R1 und R2 jeweils unsubstituiert oder mit mindestens einem Halogen substituiert sein können.

2. Nicht-wässriger Elektrolyt gemäß Anspruch 1, wobei die Propionat-basierte Esterverbindung, die durch die chemische Formel 1 ausgedrückt wird, mindestens eine Verbindung, ausgewählt aus der Gruppe bestehend aus Methylpropionat-basiertem Ester, Ethylpropionatbasiertem Ester, Propylpropionat-basiertem Ester und Butylpropionat-basiertem Ester, einschließt.

3. Nicht-wässriger Elektrolyt gemäß Anspruch 2, wobei die Ethylpropionat-basierte Esterverbindung durch die folgende chemische Formel 2 ausgedrückt wird 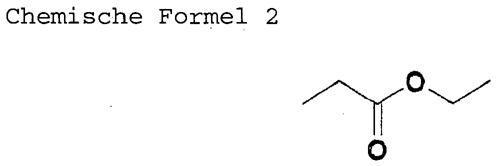 wobei mindestens ein Wasserstoffatom wahlweise mit Fluor substituiert ist.

4. Lithium-Sekundärbatterie, die eine Anode, eine Kathode, einen Separator zwischen der Anode und der Kathode und den nicht-wässrigen Elektrolyten gemäß Anspruch 1 umfasst.

5. Lithium-Sekundärbatterie gemäß Anspruch 4, wobei der Gehalt an LiBF4 0,05 bis 1,0 Gew.%, bezogen auf das Gesamtgewicht des nicht-wässrigen Elektrolyten, ist.

6. Lithium-Sekundärbatterie gemäß Anspruch 4, wobei das Lithiumsalz ferner ein Material oder eine Mischung aus mindestens zwei Materialien, ausgewählt aus der Gruppe bestehend aus LiSbF6, LiAsF6, LiClO4, LiN(C2F5SO2)2, LiN(CF3SO2)2, CF3SO3Li und LiC(CF3S02)3, einschließt.

7. Lithium-Sekundärbatterie gemäß Anspruch 4, wobei das Volumenverhältnis des Ethylencarbonats und des Propylencarbonats (Ethylencarbonat:Propylencarbonat) 1:0,25 bis 1:1 beträgt.

8. Lithium-Sekundärbatterie gemäß Anspruch 4, wobei der Gehalt des Inhibitors gegen die Reaktion zwischen der Anode und dem Propionat-basierten Ester 0,05 bis 10 Gew.%, bezogen auf das Gesamtgewicht des nicht-wässrigen Elektrolyten, ist.

9. Lithium-Sekundärbatterie gemäß Anspruch 4, wobei die Propionat-basierte Esterverbindung, die durch die chemische Formel 1 ausgedrückt wird, mindestens eine Verbindung, ausgewählt aus der Gruppe bestehend aus Methylpropionat-basiertem Ester, Ethylpropionatbasiertem Ester, Propylpropionat-basiertem Ester und Butylpropionat-basiertem Ester, einschließt.

10. Lithium-Sekundärbatterie gemäß Anspruch 9, wobei die Ethylpropionat-basierte Esterverbindung durch die folgende chemische Formel 2 ausgedrückt wird 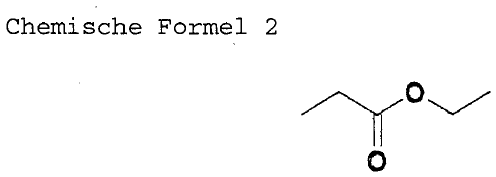 wobei mindestens ein Wasserstoffatom wahlweise mit Fluor substituiert ist.

11. Lithium-Sekundärbatterie gemäß Anspruch 4, wobei die Anode aus einem Kohlenstoffmaterial hergestellt ist, welches in der Lage ist, ein Lithiumion einzuschließen oder abzugeben.

12. Lithium-Sekundärbatterie gemäß Anspruch 4, wobei die Kathode aus einem lithiumhaltigen Oxid hergestellt ist.

## Revendications

1. Électrolyte non aqueux comprenant :
un sel de lithium contenant LiPF₆ et LiBF₄ ; et
un solvant organique mixte à base de carbonate non linéaire dans lequel (a) un carbonate cyclique ayant un carbonate d'éthylène ou un mélange de carbonate d'éthylène et de carbonate de propylène et (b) un ester à base de propionate exprimé par la Formule Chimique 1 suivante sont mélangés à hauteur d'un rapport en volume (a:b) dans la plage de 10:90 à 70:30 ; et
un inhibiteur contre une réaction entre l'anode et l'ester à base de propionate,
**caractérisé en ce que**
l'inhibiteur est un sulfonate de 1,3-dioxolane-2-onylméthylallyle, 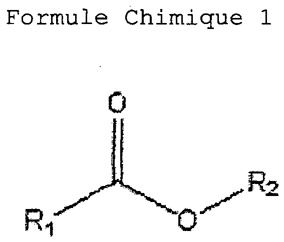
où R₂ est un groupe alkyle en C₁-C₆ linéaire ou ramifié, et R₁ et R₂ peuvent être non substitués ou substitués avec au moins un halogène, respectivement.

2. Électrolyte non aqueux selon la revendication 1, dans lequel le composé ester à base de propionate exprimé par la Formule Chimique 1 inclut au moins un composé choisi parmi le groupe consistant en un ester à base de propionate de méthyle, un ester à base de propionate d'éthyle, un ester à base de propionate de propyle, et un ester à base de propionate de butyle.

3. Électrolyte non aqueux selon la revendication 2, dans lequel le composé ester à base de propionate d'éthyle est exprimé par la Formule Chimique 2 suivante 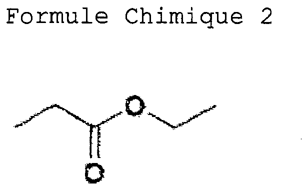 où au moins un atome d'hydrogène est facultativement substitué avec un fluor.

4. Batterie secondaire au lithium comprenant une anode, une cathode, un séparateur entre l'anode et la cathode, et l'électrolyte non aqueux selon la revendication 1.

5. Batterie secondaire au lithium selon la revendication 4, dans laquelle la teneur en LiBF₄ est 0,05 à 1,0% en poids sur la base du poids total de l'électrolyte non aqueux.

6. Batterie secondaire au lithium selon la revendication 4, dans laquelle le sel de lithium inclut en outre un matériau quelconque ou un mélange d'au moins deux matériaux choisi(s) parmi le groupe consistant en LiSbF₆, LiAsF₆, LiClO₄, LiN(C₂F₅SO₂)₂, LiN(CF₃SO₂)₂, CF₃SO₃Li et LiC(CF₃SO₂)₃.

7. Batterie secondaire au lithium selon la revendication 4, dans laquelle le rapport en volume du carbonate d'éthylène et du carbonate de propylène (carbonate d'éthylène:carbonate de propylène) est 1:0,25 à 1:1.

8. Batterie secondaire au lithium selon la revendication 4, dans laquelle la teneur de l'inhibiteur contre une réaction entre l'anode et l'ester à base de propionate est 0,05 à 10% en poids sur la base du poids total de l'électrolyte non aqueux.

9. Batterie secondaire au lithium selon la revendication 4, dans laquelle le composé ester à base de propionate exprimé par la Formule Chimique 1 inclut au moins un composé choisi parmi le groupe consistant en un ester à base de propionate de méthyle, un ester à base de propionate d'éthyle, un ester à base de propionate de propyle, et un ester à base de propionate de butyle.

10. Batterie secondaire au lithium selon la revendication 9, dans laquelle le composé ester à base de propionate d'éthyle est exprimé par la Formule Chimique 2 suivante 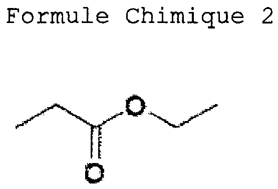 où au moins un atome d'hydrogène est facultativement substitué avec un fluor.

11. Batterie secondaire au lithium selon la revendication 4, dans laquelle l'anode est constituée d'un matériau de carbone apte à occlure ou émettre un ion lithium.

12. Batterie secondaire au lithium selon la revendication 4, dans laquelle la cathode est constituée d'un oxyde contenant du lithium.
